(19) Europäisches Patentamt
European Patent Office
Office européen des brevets

(11) **EP 1 421 856 B1**

(12) **EUROPEAN PATENT SPECIFICATION**

(45) Date of publication and mention
of the grant of the patent:
**21.01.2009 Bulletin 2009/04**

(51) Int Cl.:
***A23G 3/00*** (2006.01)

(21) Application number: **03023233.4**

(22) Date of filing: **14.10.2003**

(54) **Confectionery product**

Süßwarenprodukt

Produit de confiserie

(84) Designated Contracting States:
**AT BE BG CH CY CZ DE DK EE ES FI FR GB GR
HU IE IT LI LU MC NL PT RO SE SI SK TR**

(30) Priority: **31.10.2002 GB 0225351**

(43) Date of publication of application:
**26.05.2004 Bulletin 2004/22**

(73) Proprietor: **Société des Produits Nestlé S.A.
1800 Vevey (CH)**

(72) Inventor: **Soldani, Cristiana
20126 Milano (IT)**

(74) Representative: **Ducreux, Marie et al
Nestlé S.A.
Avenue Nestlé 55
1800 Vevey (CH)**

(56) References cited:
**EP-A- 0 533 334          WO-A-97/45021
DE-A1- 19 642 363      US-A- 3 738 845
US-A- 4 452 825**

**EP 1 421 856 B1**

**Description**

This invention relates to confectionery products based on one or more sugar alcohols, said products having improved transparency.

So-called hard candy or high boiled sweet is a common confectionery component and confectionery products may be made wholly or partly therefrom. Hard candy is a solid, glassy or amorphous material made traditionally from sugars (such as sucrose and glucose syrup) although it is also known that these can be replaced wholly or partially by sugar substitutes, in particular sugar alcohols. Suitable sugar alcohols are available commercially and are generally good sweeteners but without the same calorie content as sugars. Accordingly, they can contribute to reducing the calorie content of confectionery products and they also have a well recognised beneficial effect in the reduction of tooth decay since they are resistant to being metabolised by oral bacteria which break down sugars and starches to produce the acids responsible for tooth decay.

As well as being used to make up the whole of confectionery products (boiled sweets), hard candy can also be used as one component, for example an outer casing, of confectionery products. Products are well known which comprise a solid, for example powder, or liquid core surrounded by a casing of hard candy.

Hard candy is generally made by a process in which a mixture of the sugar or sugar alcohol and water is heated, generally under vacuum, at a temperature of about 130-150°C. The resulting mixture can still be worked and formed into confectionery products as desired and on cooling forms a glassy amorphous solid with a water content of less than 3%. Hard candy generally contains other ingredients some of which are acidic. Sugar alcohols which are not monosaccharide sugar alcohols show some susceptibility to acid hydrolysis, and so acid components are conventionally added towards the end of the heat treatment. However, hydrolysis of the sugar alcohol can still occur which in turn results in a sticky, hygroscopic product and/or crystallisation of the candy. In addition, by the time that the acid component is added, the water content of the mixture has been reduced, generally to around 2% or less. The acids are conventionally added as powder rather than pre-dissolved in water to avoid introducing additional water which would remain in the final composition, possibly with detrimental effects on the quality of the final product, but this has the consequence that dissolution of the acid may be difficult or incomplete. As a result of these factors, there is a tendency of the hard candy to be opaque.

One example of a commercially available sugar alcohol commonly used as a sugar substitute is Isomalt which is made by enzymatic rearrangement of sucrose followed by hydrogenation. Isomalt is a mixture of the isomers 1-O-$\alpha$-D-glucopyranosyl-D-mannitol dihydrate and 6-O-$\alpha$-D-glucopyranosyl-D-sorbitol. Further information concerning Isomalt can be found in the publication LFRA Ingredients Handbook, Sweeteners, Edited by Janet M Dalzell, published by Leatherhead Food RA, December 1996, pages 21 to 44. This publication describes the processing of Isomalt into hard candy and shows flavour, colour and citric acid being added at the cooling stage of the process after cooking is complete (Figure 11, page 44).

US 3,738,845 relates to a process for the preparation of clear sorbitol hard candies confections which prevents the crystallization of sorbitol by addition of an organic acid, prior to the completion of the cooking step, which is carried out to a temperature of at least 300°F (about 149°C).

EP-A-1 151 672 relates to a confectionery product comprising a filling enclosed within a casing. The filling comprises a major amount of a monosaccharide polyol in a crystalline anhydrous powder form chosen from among polyols having as cooling effect. The casing is a protective confectionery material such as hard candy.

EP-A-1 151 673 relates to a confectionery product comprising at least one functional ingredient wherein it has a casing and a filling enclosed within the casing. The filling comprises at least one confectionery material having properties that confer to the filling a perceivable effect when the filling is released in the mouth. The casing, which may be hard candy, is capable of providing release means upon the action of saliva in the mouth which acts to liberate the filling out of the casing to be left substantially as an empty shell before it has entirely dissolved in the mouth.

It is often desirable for aesthetic reasons for hard candy to be as transparent as possible. It is an object of the present invention to provide hard candy containing at least one acidic component which shows improved transparency.

According to one aspect, the present invention provides a method for the manufacture of a glassy amorphous solid as a confectionery material, the glassy amorphous solid comprising at least one sugar alcohol which is not a monosaccharide sugar alcohol and including at least one acidic component, which method comprises the steps of:

(i) forming a liquid starting material comprising the at least one sugar alcohol which is not a monosaccharide sugar alcohol and water, and including the at least one acidic component;
(ii) evaporating under conditions at which the acidic component does not cause significant hydrolysis of the sugar alcohol to dissolve the acidic component in the liquid and remove at least part of the water; and
(iii) cooling to form the glassy amorphous solid.

The glassy amorphous solid will be referred to hereinafter as hard candy. It has surprisingly been found that acidic component(s) which have conventionally been found to hydrolyse the sugar alcohol can be added from the start of the process for the manufacture of hard candy provided that conditions are used in the process under which the acid does not hydrolyse the sugar alcohol. Generally this will involve the use of a vacuum evaporator to reach the desired final moisture content at a temperature which is low enough to avoid hydrolysis of the sugar alcohol. As a result the problems referred to above are alleviated and the hard candy shows improved transparency.

Preferably, the evaporation is carried out at a temperature not exceeding 148°C, more preferably, not exceeding 145°C. The sugar alcohol may be any of the commercially available non-monosaccharide sugar alcohols intended for use in confectionery products and suitable for the production of non-hygroscopic hard candy. Suitable sugar alcohols include isomalt, maltitol, lactitol, polydextrose and combinations thereof. The sugar alcohol is preferably used as the basis of the hard candy without addition of sucrose. If desired the hard candy may be based on a mixture of sugar alcohol and sucrose but in this case some or all of the advantages of using sugar alcohols instead of sucrose may be lost.

According to a preferred embodiment of the invention, the sugar alcohol is isomalt which may optionally be used with an addition of up to 20% of maltitol syrup produced by hydrogenation of a high maltose glucose syrup. An example of such a syrup is Lycasin produced by Roquette Freres. The syrup used as starting material for hydrogenation may be obtained by controlled enzymatic hydrolysis of purified starch and, in addition to maltose, contains higher molecular weight saccharides which influence the properties of the final maltitol syrup. When used with isomalt, the maltitol syrup acts as an anti-crystallising agent to inhibit isomalt crystallisation and excessive brittleness and fragility of the hard candy.

The hard candy also includes one or more acids. The acid should be stable to the temperatures used in production of the hard candy and is generally present as a flavour or flavour enhancer. The acid may be any edible and food-acceptable acid and examples include one or more of citric, malic, lactic, tartaric and fumaric acids. The acid is generally added as the solid acid in an amount of up to 2%, preferably from 0.3 to 1.0%. For example citric acid may be added in an amount of about 0.5% and malic acid in an amount of about 0.8%.

The hard candy may also contain other heat stable ingredients. Thus the hard candy may include a high intensity sweetener to enhance the effect of the sugar alcohol and examples of such sweeteners include AcesulfameK and neohespiridin DC. Such intense sweeteners are generally added in conventional amounts to produce the desired level of sweetness, for example 0.05-0.1 %.

Other ingredients which may be included are flavourings and colourings which will generally be added in accordance with the manufacturer's recommendations. The hard candy may also include active ingredients such as menthol, vitamins or oligosaccharides in amounts such as to achieve the desired result. These other ingredients may be added to the batch at the start or may be added following cooking depending on the nature of the ingredient.

Hard candy based on sugar alcohols such as isomalt can be produced in the manner generally described for isomalt in LFRA Ingredients Handbook, Sweeteners, Edited by Janet M Dalzell, published by Leatherhead Food RA, December 1996, pages 21 to 44. The ingredients for the hard candy may be mixed initially to form a basic syrup with water generally at about 70-80% solids, preferably about 75% solids. Care should be taken to dissolve the ingredients as completely as possible and dissolution will generally take place in hot water, for example at around 80 to 100°C. If desired, the sugar alcohol can be dissolved first, followed by addition of other ingredients including the acid only once the sugar alcohol has fully dissolved.

Cooking is carried out at elevated temperature using conditions under which the acid does not cause significant hydrolysis of the sugar alcohol. This will usually involve the use of a multi-stage evaporation process with reduced pressure (at least a partial vacuum) being applied in one or more stages to ensure removal of water to the desired level. Minimising the cooking temperature and cooking time prevents the acid causing significant hydrolysis of the sugar alcohol. Cooking is continued to remove water until the desired water level, generally below 3%, preferably 2% or less, more preferably 1% or less, has been achieved. A low moisture content prevents stickiness and recrystallisation of the hard candy.

Dissolution of the sugar alcohol and addition of other ingredients is generally carried out batchwise, for example in an open kettle with agitation, to form the basic syrup with a temperature of, for example 80°C. Cooking may be carried out in batches or continuously but continuous production using conventional cooking apparatus is preferred for commercial scale production. For example, basic syrup at 80°C can be heated in an evaporator at about 115-125°C where water is removed without application of a vacuum. The partially dehydrated mass is then fed to a second evaporator under vacuum at 135-140°C where the remainder of the water is removed down to the desired water content. Following cooking the mass is cooled, for example by depositing on a cooling wheel or table.

According to one preferred embodiment of the invention, the hard candy is used to make a two part confectionery product with a liquid or powder filling encased in a shell of the hard candy. Examples of such products are the confectionery products disclosed in EP-A-1 151 672 and EP-A-1 151 673 referred to above. The filling may be based on a polyol such as xylitol which has a cooling effect when the filling is delivered in the mouth. The filling may contain an active ingredient such as one or more vitamins (e.g vitamin C or vitamin E), oligosaccharides, camomile, lemon balm or menthol. For further discussion of active ingredients which may be incorporated into the filling reference is made to EP-A-1 151 673, paragraphs [0033] - [0049].

Prior to final solidification, the hard candy may be converted into confectionery products such as those referred to above using the methods as described in EP-A-1 151 672 and 1 151 673.

Enhanced transparency in the hard candy is a generally desirable property on aesthetic grounds but is particularly desirable in the context of two part confectionery products as referred to above.

Transparency can be measured on a sample of the solid hard candy of standard thickness by a method in which percent transmission is measured spectrophotometrically over a range of wavelengths, for example 400 to 700nm. For example, a section from the product can be mounted in a holder and placed against a standard background card with black and white areas. Light from a spectrometer, such as an X-Rite SP68 Spectrometer, is passed through the central area of the sample. The energy reflected by the sample is recorded over the standard black background and the standard white background which allows percentage transmission to be calculated. Such a method is described in more detail in Example 3 below.

Transmission for a hard candy prepared according to the invention has been found to be consistently greater than with a comparable product made by a method using higher temperature with addition of acidic ingredients during cooling.

According to another aspect, the present invention provides a confectionery product at least a part of which is a glassy amorphous solid comprising one or more sugar alcohols which are not monosaccharide sugar alcohols and at least one acidic component, the said glassy amorphous solid having a transmission of:

at least 47.8% at 450nm; and/or
at least 50.9% at 550nm; and/or
at least 52.3% at 650nm.

It should be noted that transmission as measured at a particular wavelength may be affected by factors other than the inherent transparency of the hard candy and one such factor is the absorption of any dye which may have been added to the formulation to produce a coloured confectionery product. In the case of a colourless product, i.e. hard candy to which no dye has been added, it is likely that the product will have transmission of at least the levels stated above at all three wavelengths. Products to which dye has been added may not exhibit the stated minimum transmission levels at all three wavelengths depending on the absorption of the dye but should show the stated minimum transmission level for at least one of the wavelengths.

The invention is illustrated by the following non-limiting examples in which reference is made to the accompanying drawings. In the drawings:

Figure 1 shows the mounting apparatus used for the samples in Example 3;
Figure 2 illustrates the theory of the method of example 3; and
Figure 3 is a graphical representation of the results of Example 3.

Example 1: Example according to the present invention

50kg of water at 95°C is added to a stirred jacketed vessel. This is followed by 25kg of maltitol syrup (Lycasin 80/55 from Roquette Freres) and then 125kg Isomalt (Isomalt ST type F from Palatinit Süßungsmittel GmbH). The batch is mixed and heated until the batch reaches a temperature of 80°C. 1kg citric acid (citric acid anhydrous, fine granular 51 N, Roche), 1.4kg malic acid (malic acid Fuso type M, fine granular) and 0.2kg AcesulfameK are added manually to the batch to form a casing premix.

The casing premix is continuously pumped into two evaporators arranged in series. The first stage takes the mass to 120°C at atmospheric pressure and then the second stage heats the mass to 138°C. The mass enters a flash system where a vacuum (0.5 atm.) is applied to take the mass to a final moisture content of 1.2%.

The resulting cooked mass is cooled down on a table to 70°C. A batch roller equipped with a powder pump is charged with the cooked mass. A filling of 98% xylitol powder (Xylisorb 90 from Roquette Freres), 1% citric acid, 0.2% lemon flavour, 0.8% AcesulfameK is then pumped into the centre of the cooked Isomalt mass within the batch roller and a rope, calibrated in a rope sizer at an external diameter of about 15mm, is pulled into a chain die assembly. The filling pump is calibrated to pump about a 12% of filling part with respect to the casing part. Xylitol filled candies are pressed into round shapes of 2 grams having dimensions of about 11.5 mm height by about 15 mm diameter which are cooled in a cooling tunnel until reaching a temperature of 30°C.

Example 2: Comparison example with addition of acid after cooking

50kg of water at 95°C is added to a stirred jacketed vessel. This is followed by 25kg of maltitol syrup (Lycasin 80/55 from Roquette Freres) and then 125kg Isomalt (Isomalt ST type F from Palatinit Süßungsmittel GmbH). The batch is mixed and heated until the batch reaches a temperature of 110°C. The batch is then passed to an evaporator where it is cooked to 145°C. The mass is then put in batch under a slight vacuum (0.9atm.) for 3 minutes. The cooked mass is then discharged on a cooled table and 1kg citric acid (citric acid anhydrous, fine granular 51 N, Roche), 1.4kg malic acid (malic acid Fuso type M, fine granular) and 0.2kg AcesulfameK are added. The ingredients are mixed until a plastic mass if formed. This mass at 70°C is then introduced into a batch roller equipped with a powder pump.

A filling of 98% xylitol powder (Xylisorb 90 from Roquette Freres), 1% citric acid, 0.2% lemon flavour, 0.8% AcesulfameK is then pumped into the centre of the cooked Isomalt mass within the batch roller and a rope, calibrated in a rope sizer at an external diameter of about 15mm, is pulled into a chain die assembly. The filling pump is calibrated to pump about a 12% of filling part with respect to the casing part. Xylitol filled candies are pressed into round shapes of 2 grams having dimensions of about 11.5 mm height by about 15 mm diameter which are cooled in a cooling tunnel until reaching a temperature of 30°C.

Example 3: Measurement of Transmission

Samples of the outer casing of the products produced in Examples 1 and 2 are prepared for optical analysis by mounting them in a metal ring, cutting off the back of the product flush with the ring and then brushing out the filling powder. Mounting the samples in a ring provides three benefits. Once fixed in the ring, the sample can be more easily handled without touching or damaging the product surface. The position of the ring determines the thickness of the sample which is to be measured so that the average path length of light through all samples can be made approximately the same. The dimensions of each sample relative to the ring can be easily measured using engineering tools such as a digital calliper or a micrometer.

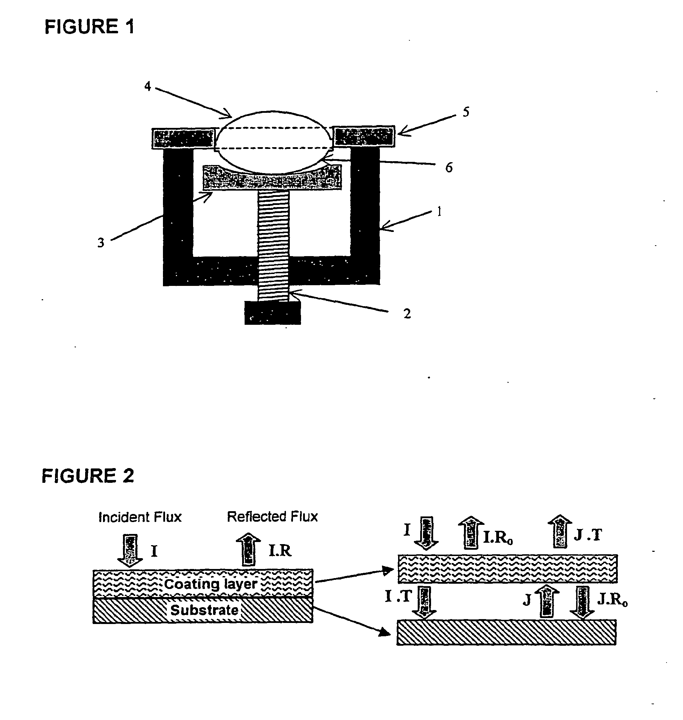

Figure 1 shows a cross-sectional diagram of mounting apparatus for fitting a ring (5) to a sample (4). A sample holder (3) can be positioned at a set height relative to a mounting frame (1) by adjusting a screw (2). The position of the screw is adjusted so that the thickness of the ring mounted sample, after cutting off the back of the sweet, would be 3.7mm from the top centre of the sweet to the back of the metal ring. After positioning, a metal ring (5), pre-heated to approximately 120°C, is pushed down onto the sample with a gloved hand until the ring lies in contact with the metal mounting frame (1). The ring is chosen so as to have an internal diameter only slightly smaller than the sample, so that it grips the edges of the sample tightly without damaging the main body of the sample. As the ring touches the metal mounting frame it cools rapidly and can be handled without gloves.

The ring containing the sample is then gripped in a vice (not shown) and the back of the sweet (6) is carefully sawn off with a fine toothed saw. The powder filling can then be brushed out to leave a sample of the casing material. The cut edge of the sweet casing is then smoothed to be flush with the surface of the ring by gently rubbing the assembly against fine grade abrasive paper.

The sample to be measured is placed on a standard background card and in such a position that the light from an X-Rite SP68 Spectrometer is incident on the central area of the sample. The energy reflected by the sample is recorded with the sample placed over a standard black background card and with the sample placed over a standard white background card. This allows a value for the percentage transmission to be calculated, according to the following method based on a Kubelka-Munk type analysis, often referred to in text books in this area such as "Colour Physics for Industry" ed. R. MacDonald, SDC Press, 1997 pp.292-304.

Analysis Model:

Consider each part of the sample assembly to be represented by a coating layer on a substrate which is the white or black background. The incident energy flux on the coating is **I** and the energy flux passing from the other direction is **J**. This is illustrated in Figure 2.

$$R = \frac{\text{energy flux reflected by the system}}{\text{energy flux incident on the system}}$$

$$R_g = \frac{\text{energy flux reflected by the substrate}}{\text{energy flux incident on the substrate}}$$

where $R_1$ and $R_{g1}$ are the above ratios for a white background and $R_2$ and $R_{g2}$ are for a black background.

$$R_0 = \frac{\text{energy flux reflected by the layer}}{\text{energy flux incident on the layer}}$$

$$T = \frac{\text{energy flux transmitted through the layer}}{\text{energy flux incident on the layer}}$$

$$R_0 = \frac{R_1 R_{g2} - R_2 R_{g1}}{R_{g1} R_{g2} (R_1 - R_2) + (R_{g2} - R_{g1})}$$

$$T = \sqrt{\frac{(R_1 - R_0)(1 - R_0 R_{g1})}{R_{g1}}}$$

Six samples manufactured according to Example 1, and six samples manufactured according to Example 2 were measured and the transmission calculated as above. The transmission values and standard errors are given below in Table 1.

Table 1

| | Example 1 | | Example 2 | |
|---|---|---|---|---|
| Wavelength/nm | T Avg(6) % | Std Err(6) | T Avg(6) % | Std Err(6) |
| 400 | 48.17 | 0.78 | 45.52 | 2.61 |
| 410 | 47.88 | 0.80 | 45.16 | 2.34 |
| 420 | 47.04 | 0.82 | 44.39 | 2.23 |
| 430 | 47.12 | 0.83 | 44.46 | 2.15 |
| 440 | 47.76 | 0.84 | 45.04 | 2.11 |
| 450 | 48.43 | 0.85 | 45.70 | 2.11 |
| 460 | 49.18 | 0.85 | 46.44 | 2.12 |
| 470 | 49.64 | 0.88 | 46.93 | 2.12 |
| 480 | 49.97 | 0.90 | 47.28 | 2.10 |
| 490 | 50.30 | 0.92 | 47.60 | 2.09 |
| 500 | 50.63 | 0.93 | 47.90 | 2.08 |
| 510 | 51.04 | 0.95 | 48.28 | 2.08 |
| 520 | 51.40 | 0.96 | 48.59 | 2.07 |
| 530 | 51.65 | 0.95 | 48.74 | 2.05 |
| 540 | 51.83 | 0.92 | 48.82 | 2.03 |
| 550 | 51.90 | 0.89 | 48.85 | 2.02 |
| 560 | 51.94 | 0.87 | 48.89 | 2.02 |
| 570 | 52.04 | 0.85 | 49.00 | 2.01 |
| 580 | 52.12 | 0.84 | 49.14 | 2.01 |

(continued)

| Wavelength/nm | Example 1 | | Example 2 | |
|---|---|---|---|---|
| | T Avg(6) % | Std Err(6) | T Avg(6) % | Std Err(6) |
| 590 | 52.14 | 0.87 | 49.28 | 2.02 |
| 600 | 52.18 | 0.91 | 49.45 | 2.03 |
| 610 | 52.28 | 0.94 | 49.62 | 2.03 |
| 620 | 52.43 | 0.96 | 49.79 | 2.01 |
| 630 | 52.61 | 0.99 | 49.94 | 1.98 |
| 640 | 52.82 | 1.00 | 50.10 | 1.96 |
| 650 | 53.07 | 0.94 | 50.32 | 1.94 |
| 660 | 53.28 | 0.88 | 50.63 | 1.96 |
| 670 | 53.36 | 0.87 | 51.06 | 2.05 |
| 680 | 53.39 | 0.89 | 51.52 | 2.13 |
| 690 | 53.40 | 0.92 | 51.88 | 2.15 |
| 700 | 53.39 | 0.96 | 52.19 | 2.13 |

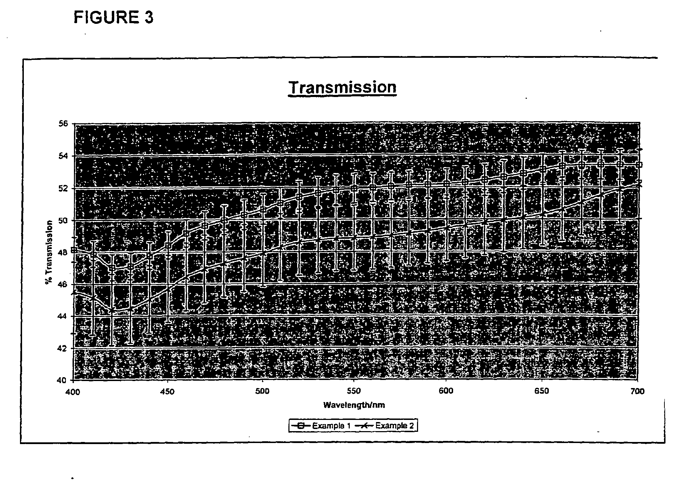

The results are plotted in Figure 3.

**Claims**

1. A method for the manufacture of a glassy amorphous solid as a confectionery material, the glassy amorphous solid comprising at least one sugar alcohol which is not a monosaccharide sugar alcohol and including at least one acidic component, which method comprises the steps of:

(i) forming a liquid starting material comprising the at least one sugar alcohol which is not a monosaccharide sugar alcohol and water, and including the at least one acidic component;
(ii) evaporating under conditions at which the acidic component does not cause significant hydrolysis of the sugar alcohol to dissolve the acidic component in the liquid and remove at least part of the water; and
(iii) cooling to form the glassy amorphous solid.

2. A method as claimed in claim 1, wherein evaporating is carried out at a temperature that does not exceed 148°C.

3. A method as claimed in claim 1 or 2 wherein a vacuum evaporator is used to reach the desired final water content.

4. A method as claimed in claim 3 wherein evaporation is carried out in multiple stages with a reduced pressure being applied in some or all of the stages.

5. A method as claimed in claim 4 wherein the liquid is fed to an evaporator at about 1115-125 DEG C where water is removed without application of a vacuum and the partially dehydrated mass is then fed to a second evaporator stage under vacuum at 135-140 DEG C where the remainder of the water is removed down to the desired water content.

6. A method as claimed in any of claims 1 to 5 wherein the water content is reduced to below 3%.

7. A method as claimed in any of claims 1 to 6 wherein the sugar alcohol is selected from isomalt, maltitol, lactitol, polydextrose and combinations thereof.

8. A method as claimed in any of claims 1 to 6 wherein the sugar alcohol is isomalt or a mixture of isomalt with up to 20% of maltitol syrup.

**9.** A method as claimed in any of claims 1 to 8 wherein the acid is one or more of citric, malic, lactic, tartaric and fumaric acids.

**10.** A method as claimed in any of claims 1 to 9 wherein the acid is present in an amount of up to 2% by weight.

**11.** A method as claimed in claim 10 wherein the acid is present in an amount of from 0,3 to 1.0% by weight.

**12.** A confectionery product at least a part of which is a glassy amorphous solid comprising one or more sugar alcohols which are not monosaccharide sugar alcohols and at least one acidic component, the said glassy amorphous solid having a transmission of:

at least 47.8% at 450nm; and/or
at least 50.9% at 550nm; and/or
at least 52.3% at 650nm.

**13.** A confectionery product a claimed in claim 12 which is a two part product with a liquid or powder filling encased in a shell of the glassy amorphous solid.

**14.** A confectionery product as claimed in claim 13 wherein the filling is based on a polyol which has a cooling effect when the filling is delivered in the mouth.

**15.** A confectionery product as claimed in claim 14 wherein the polyol is xylitol.

**16.** A confectionery product as claimed in any of claims 13 to 14 wherein the filling contains one or more active ingredients selected from vitamins, oligosaccharides, camomile lemon balm and menthol.


**Patentansprüche**

**1.** Verfahren zur Herstellung eines glasartigen amorphen Feststoffs als Süßwarenmaterial, wobei der glasartige amorphe Feststoff wenigstens einen Zuckeralkohol umfasst, der kein Monosaccharid-Zuckeralkohol ist, und wenigstens eine saure Komponente beinhaltet, wobei das Verfahren die Schritte umfasst:

(i) Bilden eines flüssigen Ausgangsmaterials, das den wenigstens einen Zuckeralkohol, der kein Monosaccharid-Zuckeralkohol ist, und Wasser umfasst, und dem die wenigstens eine saure Komponente beigefügt ist;
(ii) Eindampfen unter Bedingungen, unter denen die saure Komponente keine nennenswerte Hydrolyse des Zuckeralkohols bewirkt, um die saure Komponente in der Flüssigkeit aufzulösen und wenigstens einen Teil des Wassers zu entfernen; und
(iii) Abkühlen unter Bildung des glasartigen amorphen Feststoffs.

**2.** Verfahren nach Anspruch 1, wobei das Eindampfen bei einer Temperatur durchgeführt wird, die 148 °C nicht übersteigt.

**3.** Verfahren nach Anspruch 1 oder 2, wobei ein Vakuum-Eindampfer verwendet wird, um den gewünschten End-Wassergehalt zu erreichen.

**4.** Verfahren nach Anspruch 3, wobei das Eindampfen in mehreren Stufen durchgeführt wird, wobei in einigen oder allen Stufen ein verminderter Druck zur Anwendung kommt.

**5.** Verfahren nach Anspruch 4, wobei die Flüssigkeit einem Eindampfer bei etwa 115-125 °C zugeführt wird, wo Wasser ohne Anwendung eines Vakuums entfernt wird, und wobei die teilweise dehydratisierte Masse dann einer zweiten Eindampferstufe unter Vakuum bei 135-140 °C zugeführt wird, wo der Rest des Wassers bis herab zu dem gewünschten Wassergehalt entfernt wird.

**6.** Verfahren nach irgendeinem der Ansprüche 1 bis 5, wobei der Wassergehalt auf unter 3% vermindert wird.

**7.** Verfahren nach irgendeinem der Ansprüche 1 bis 6, wobei der Zuckeralkohol ausgewählt ist aus Isomalt, Maltit, Lactit, Polydextrose und Kombination davon.

8. Verfahren nach irgendeinem der Ansprüche 1 bis 6, wobei der Zuckeralkohol Isomalt oder eine Mischung aus Isomalt mit bis zu 20% Maltit-Sirup ist.

9. Verfahren nach irgendeinem der Ansprüche 1 bis 8, wobei die Säure eine oder mehrere von Zitronen-, Äpfel-, Milch-, Wein- und Fumarsäure ist.

10. Verfahren nach irgendeinem der Ansprüche 1 bis 9, wobei die Säure in einer Menge von bis zu 2 Gew.-% vorhanden ist.

11. Verfahren nach Anspruch 10, wobei die Säure in einer Menge von 0,3 bis 1,0 Gew.-% vorhanden ist.

12. Süßwarenprodukt, bei dem wenigstens ein Teil ein glasartiger amorpher Feststoff ist, der einen oder mehrere Zuckeralkohole, die keine Monosaccharid-Zuckeralkohole sind, und wenigstens eine saure Komponente umfasst, wobei der genannte glasartige amorphe Feststoff eine Durchlässigkeit aufweist von:

   wenigstens 47,8% bei 450 nm; und/oder
   wenigstens 50,9% bei 550 nm; und/oder
   wenigstens 52,3% bei 650 nm.

13. Süßwarenprodukt nach Anspruch 12, das ein zweiteiliges Produkt mit einer flüssigen oder Pulverfüllung ist, die in einer Schale aus dem glasartigen amorphen Feststoff eingekapselt ist.

14. Süßwarenprodukt nach Anspruch 13, wobei die Füllung auf einem Polyol basiert, das einen Kühleffekt aufweist, wenn die Füllung im Mund abgegeben wird.

15. Süßwarenprodukt nach Anspruch 14, wobei das Polyol Xylit ist.

16. Süßwarenprodukt nach irgendeinem der Ansprüche 13 bis 14, wobei die Füllung einen oder mehrere aktive Bestandteile enthält, die ausgewählt sind aus Vitaminen, Oligosacchariden, Kamille, Zitronenmelisse und Menthol.


**Revendications**

1. Procédé pour la production d'une substance solide amorphe vitreuse comme substance de confiserie, la substance solide amorphe vitreuse comprenant au moins un sucre-alcool qui n'est pas un sucre-alcool monosaccharidique, et comprenant au moins un constituant acide, procédé qui comprend les étapes consistant :

   (i) à former une matière de départ liquide comprenant ledit au moins un sucre-alcool qui n'est pas un sucre-alcool monosaccharidique et de l'eau, et comprenant ledit au moins un constituant acide ;
   (ii) à effectuer une évaporation dans des conditions dans lesquelles le constituant acide ne provoque pas d'hydrolyse significative du sucre-alcool pour dissoudre le constituant acide dans le liquide et éliminer au moins une partie de l'eau ; et
   (iii) à faire refroidir pour former la substance solide amorphe vitreuse.

2. Procédé suivant la revendication 1, dans lequel l'évaporation est effectuée à une température qui ne dépasse pas 148°C.

3. Procédé suivant la revendication 1 ou 2, dans lequel un évaporateur à vide est utilisé pour atteindre la teneur en eau finale désirée.

4. Procédé suivant la revendication 3, dans lequel l'évaporation est effectuée dans des étages multiples, avec une pression réduite appliquée dans une partie ou la totalité des étages.

5. Procédé suivant la revendication 4, dans lequel le liquide est amené à un évaporateur à environ 115-125°C, dans lequel l'eau est éliminée sans mise sous vide, et la masse partiellement déshydratée est ensuite amenée à un second étage d'évaporateur sous vide à 135-140°C, dans lequel le reste de l'eau est éliminé jusqu'à la teneur en eau désirée.

**6.** Procédé suivant l'une quelconque des revendications 1 à 5, dans lequel la teneur en eau est réduite à moins de 3 %.

**7.** Procédé suivant l'une quelconque des revendications 1 à 6, dans lequel le sucre-alcool est choisi entre l'isomalt, le maltitol, le lactitol, le polydextrose et leurs associations.

**8.** Procédé suivant l'une quelconque des revendications 1 à 6, dans lequel le sucre-alcool est l'isomalt ou un mélange d'isomalt et d'une quantité allant jusqu'à 20 % de sirop de maltitol.

**9.** Procédé suivant l'une quelconque des revendications 1 à 8, dans lequel l'acide est un ou plusieurs des acides consistant en les acides citrique, malique, lactique, tartrique et fumarique.

**10.** Procédé suivant l'une quelconque des revendications 1 à 9, dans lequel l'acide est présent en une quantité allant jusqu'à 2 % en poids.

**11.** Procédé suivant la revendication 10, dans lequel l'acide est présent en une quantité de 0,3 à 1,0 % en poids.

**12.** Produit de confiserie dont au moins une partie est une substance solide amorphe vitreuse comprenant un ou plusieurs sucres-alcools qui ne sont pas des sucres-alcools monosaccharidiques et au moins un constituant acide, la substance solide amorphe vitreuse ayant une transmission :

d'au moins 47,8 % à 450 nm ; et/ou
d'au moins 50,9 % à 550 nm ; et/ou
d'au moins 52,3 % à 650 nm.

**13.** Produit de confiserie suivant la revendication 12, qui est un produit en deux parties avec un fourrage liquide ou en poudre entouré par une enveloppe de la substance solide amorphe vitreuse.

**14.** Produit de confiserie suivant la revendication 13, dans lequel le fourrage est à base d'un polyol qui a un effet rafraîchissant lorsque le fourrage est mis dans la bouche.

**15.** Produit de confiserie suivant la revendication 14, dans lequel le polyol est le xylitol.

**16.** Produit de confiserie suivant l'une quelconque des revendications 13 et 14, dans lequel le fourrage contient un ou plusieurs ingrédients actifs choisis entre des vitamines, des oligosaccharides, la camomille, la citronnelle et le menthol.

FIGURE 1

FIGURE 2

FIGURE 3

Transmission

**EP 1 421 856 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3738845 A
- EP 1151672 A
- EP 1151673 A

### Non-patent literature cited in the description

- LFRA Ingredients Handbook. Leatherhead Food RA, December 1996, 21-44
- LFRA Ingredients Handbook, Sweeteners. Leatherhead Food RA, December 1996, 21-44
- *Colour Physics for Industry,* 1997, 292-304